# EUROPEAN PATENT APPLICATION

(11) **EP 4 745 379 A1**
(43) Date of publication of application: **20.05.2026**
(21) Application number: 25215721.9
(22) Date of filing: 13.11.2025
(51) Int. Cl.: F02C 7/32, F02C 7/36, F16H 55/17, F16H 55/08

(54) **ASYMMETRIC GEAR TEETH FOR A GAS TURBINE GEARBOX**

(30) Priority: 14.11.2024 US 202418947589
(71) Applicant: Pratt & Whitney Canada Corp., (01BE5) Longueuil, QC J4G 1A1 (CA)
(72) Inventor: HARVEY, Daniel, (01BE5) Longueuil, J4G 1A1 (CA)
(74) Representative: Dehns

(57) **Abstract**

A spur gear (42) of a gearbox (30) of a gas turbine engine system of an aircraft includes a gear body (50), and a plurality of gear teeth (52) extending radially outwardly from the gear body (50). A gear tooth of the plurality of gear teeth (52) includes two opposing tooth sides (66,68) extending to a tooth tip (62). The tooth tip (62) defines a radially outboard extent of the gear tooth (52). A first tooth side (66) of the opposing tooth sides (66,68) has a first pressure angle (72), and a second tooth side (68) of the opposing tooth sides (66,68) has a second pressure angle (76) different from the first pressure angle (72).

## Description

### BACKGROUND

Exemplary embodiments pertain to the art of gas turbine engine systems for aircraft, and in particular to gear arrangements in a gearbox of a gas turbine engine system.

Gas turbine engine systems often include gearboxes operably connected thereto to transfer rotational energy from the gas turbine engine to one or more accessory components of the aircraft. The gearbox includes gear arrangements that are contained within a gearbox housing. It is desired to provide efficient gear arrangements within the restricted space of the gearbox housing.

### BRIEF DESCRIPTION

According to one aspect of the present invention, there is provided a spur gear of a gearbox of a gas turbine engine system of an aircraft including a gear body, and a plurality of gear teeth extending radially outwardly from the gear body. A gear tooth of the plurality of gear teeth includes two opposing tooth sides extending to a tooth tip. The tooth tip defines a radially outboard extent of the gear tooth. A first tooth side of the opposing tooth sides has a first pressure angle, and a second tooth side of the opposing tooth sides has a second pressure angle different from the first pressure angle.

Optionally, and in accordance with the above the first tooth side is a drive side of the gear tooth, the first pressure angle being greater than the second pressure angle.

Optionally, and in accordance with any of the above, the first pressure angle is in the range of 25 degrees to 40 degrees.

Optionally, and in accordance with any of the above, the first pressure angle is in the range of 30 degrees to 34 degrees.

Optionally, and in accordance with any of the above, the second pressure angle is in the range of 15 degrees to 30 degrees.

Optionally, and in accordance with any of the above, the second pressure angle is in the range of 17 degrees to 25 degrees.

According to another aspect of the present invention, there is provided a gearbox of a gas turbine engine system of an aircraft including a gearbox housing, and one or more gear arrangements positioned in the housing to transfer rotational energy extracted from a gas turbine engine to one or more accessory components. A gear arrangement of the one or more gear arrangements includes a spur gear. The spur gear includes a gear body and a plurality of gear teeth extending radially outwardly from the gear body. A gear tooth of the plurality of gear teeth includes two opposing tooth sides extending to a tooth tip. The tooth tip defines a radially outboard extent of the gear tooth. A first tooth side of the opposing tooth sides has a first pressure angle, and a second tooth side of the opposing tooth sides has a second pressure angle different from the first pressure angle.

Optionally, and in accordance with any of the above, the first tooth side is a drive side of the gear tooth, the first pressure angle being greater than the second pressure angle.

Optionally, and in accordance with any of the above, the first pressure angle is in the range of 25 degrees to 40 degrees.

Optionally, and in accordance with any of the above, the first pressure angle is in the range of 30 degrees to 34 degrees.

Optionally, and in accordance with any of the above, the second pressure angle is in the range of 15 degrees to 30 degrees.

Optionally, and in accordance with any of the above, the second pressure angle is in the range of 17 degrees to 25 degrees.

Optionally, and in accordance with any of the above, the gearbox is configured for operable connection to the gas turbine engine via a power take off connecting the gas turbine engine to the gearbox.

According to another aspect of the present invention, there is provided a gas turbine engine system of an aircraft including a gas turbine engine and a gearbox operably connected to the gas turbine engine. The gearbox includes a gearbox housing and one or more gear arrangements positioned in the housing to transfer rotational energy extracted from a gas turbine engine to one or more accessory components. A gear arrangement of the one or more gear arrangements includes a spur gear. The spur gear includes a gear body and a plurality of gear teeth extending radially outwardly from the gear body. A gear tooth of the plurality of gear teeth includes two opposing tooth sides extending to a tooth tip. The tooth tip defines a radially outboard extent of the gear tooth. A first tooth side of the opposing tooth sides has a first pressure angle, and a second tooth side of the opposing tooth sides has a second pressure angle different from the first pressure angle.

Optionally, and in accordance with any of the above, the first tooth side is a drive side of the gear tooth, the first pressure angle being greater than the second pressure angle.

Optionally, and in accordance with any of the above, the first pressure angle is in the range of 25 degrees to 40 degrees.

Optionally, and in accordance with any of the above, the first pressure angle is in the range of 30 degrees to 34 degrees.

Optionally, and in accordance with any of the above, the second pressure angle is in the range of 15 degrees to 30 degrees.

Optionally, and in accordance with any of the above, the second pressure angle is in the range of 17 degrees to 25 degrees.

Optionally, and in accordance with any of the above, the gearbox is connected to the gas turbine engine via a power take off connecting the gas turbine engine to the gearbox.

### BRIEF DESCRIPTION OF THE DRAWINGS

The following descriptions should not be considered limiting in any way. With reference to the accompanying drawings, like elements are numbered alike:
FIG. 1 is an illustration of an exemplary embodiment of a gas turbine engine;
FIG. 2 is an illustration of an exemplary embodiment of a gearbox connection to a gas turbine engine;
FIG. 3 is an illustration of an embodiment of a gear arrangement of a gearbox; and
FIG. 4 is a cross-sectional view of an embodiment of a gear tooth of a spur gear.

### DETAILED DESCRIPTION

A detailed description of one or more embodiments of the disclosed apparatus and method are presented herein by way of exemplification and not limitation with reference to the Figures.

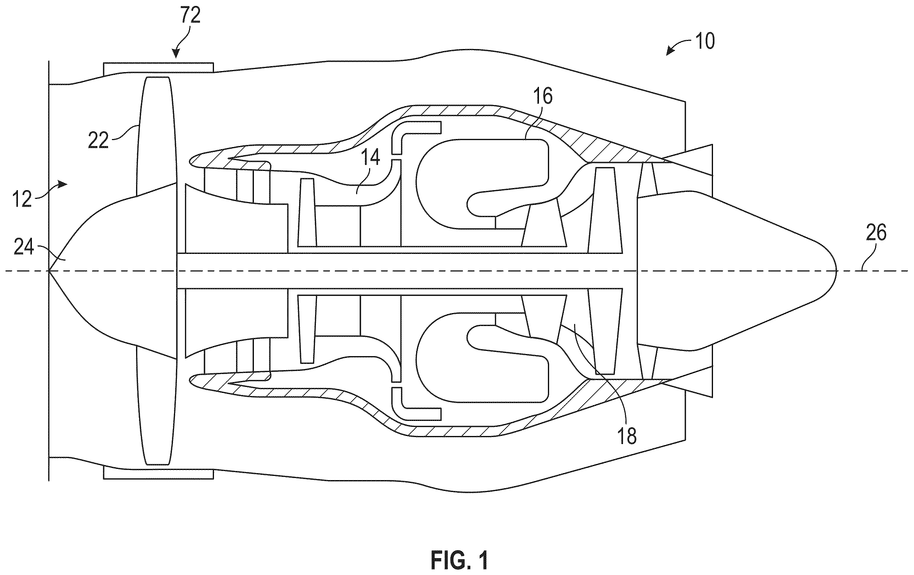

FIG. 1 illustrates a turbofan gas turbine engine 10 of a type provided for use in subsonic flight, generally comprising in serial flow communication a fan 12 through which ambient air is propelled, a multi-stage compressor 14 for pressurizing the air, a combustor 16 in which the compressed air is mixed with fuel and ignited for generating an annular stream of hot combustion gases, and a turbine section 18 for extracting energy from the combustion gases. The fan 12 includes a fan case 72 surrounding a circumferential array of fan blades 22 extending radially outwardly from a rotor 24 mounted for rotation about a central axis 26 of the engine 10.

It should be noted that the terms "radial", "axial" and "circumferential" used throughout the description and the appended claims, are defined with respect to the central axis 26 of the engine 10. The terms "front", "forward" "afore", "aft" and after" used throughout the description and the appended claims are defined with respect to the flow direction of air being propelled through the engine.

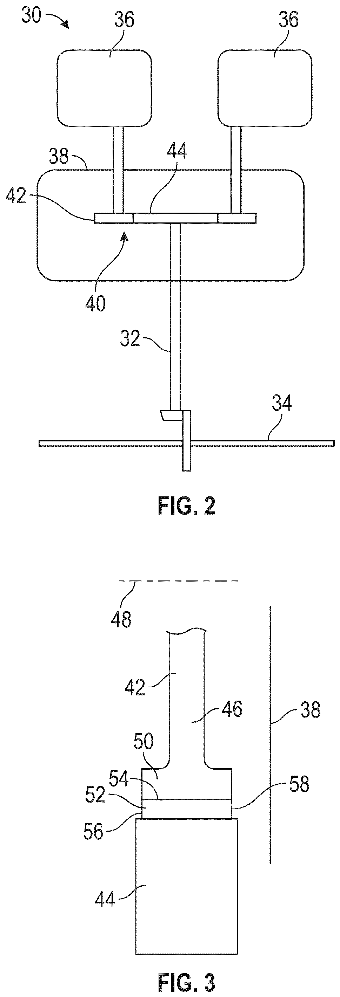

Referring now to FIG. 2, a gearbox 30 is operably connected to the engine 10 via, for example, a power takeoff 32 operably connected to a compressor shaft 34 of the engine 10. Rotational energy extracted from the engine 10 via the power takeoff is utilized to power accessory components 36 such as an electrical generator or the like connected to the gearbox 30. The gearbox 30 includes a gearbox housing 38 and one or more gear arrangements 40 therein to transfer the rotational energy from the power takeoff 32 to the accessory components 36.

Referring now to FIG. 3, in at least one of the gear arrangements 40, a first gear 42 is meshed with a second gear 44, with at least the first gear 42 being a spur gear. The spur gear 42 is substantially cylindrical and includes a gear hub 46 centered on a gear centerline 48 and a gear body 50 at a radial end of the gear hub 46. The gear body 50 includes a plurality of gear teeth 52 extending radially outwardly from a body base 54. The gear teeth 52 extend axially from a first gear end 56 to a second gear end 58, opposite the first gear end 56. In some embodiments the plurality of gear teeth 52 are circumferentially equally spaced about the gear centerline 48. The spur gear 42 is configured to rotate about the gear centerline 48.

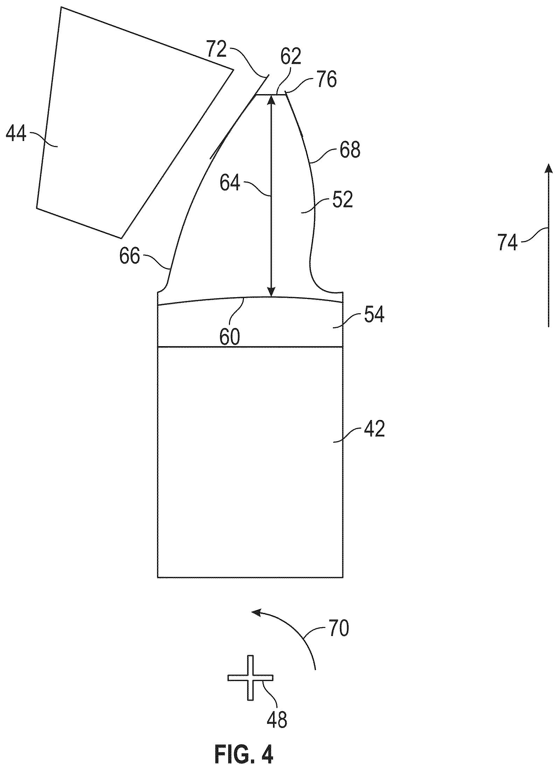

Referring now to FIG. 4, illustrated is a cross-sectional view of an embodiment of a gear tooth 52 of the spur gear 42. The gear tooth 52 has a tooth base 60 disposed at the body base 54, and extends to a tooth tip 62 defining a radially outward extent of the gear tooth 52, defining a tooth height 64. Two tooth sides, a drive side 66 and a non-drive side 68 extend between the tooth base 60 and the tooth tip 62 to define the gear tooth 52. The drive side 66 is defined as the tooth side urged into engagement with an adjacent second gear 44 by rotation of the spur gear 42 about the gear centerline 48 in a rotation direction 70. The non-drive side 68 is defined as the tooth side opposite the drive side 66.

The gear tooth 52 is asymmetric, in that a drive side pressure angle 72 of the drive side 66 relative to radial direction 74 is different from a non-drive side pressure angle 76 of the non-drive side 68 relative to the radial direction 74. In some embodiments, the drive side pressure angle 72 is in the range of 25-40 degrees, and in other embodiments between 30 and 34 degrees. Additionally, in some embodiments the non-drive side pressure angle 76 is in the range of 15-30 degrees, and in other embodiments between 17 and 25 degrees.

Utilizing the asymmetric gear tooth 52 in the spur gear 42 increases gear load capacity, reduces contact stresses and increases gear power density, which can be implemented via a reduced gear size. The axial width of the body base 54 may be reduced, allowing the spur gear 42 to fit into a smaller operating envelope. Additionally, use of the asymmetric gear tooth 52 reduces gear mesh contact stresses and increases gear mesh film thickness while also reducing weight of the spur gear when compared to a spur gear having a symmetrical gear tooth.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A spur gear (42) of a gearbox (30) of a gas turbine engine system of an aircraft, comprising:
a gear body (50); and
a plurality of gear teeth (52) extending radially outwardly from the gear body (50), a gear tooth of the plurality of gear teeth (52) including two opposing tooth sides (66,68) extending to a tooth tip (62), the tooth tip (62) defining a radially outboard extent of the gear tooth (52), wherein:
a first tooth side (66) of the opposing tooth sides (66,68) has a first pressure angle (72); and
a second tooth side (68) of the opposing tooth sides (66,68) has a second pressure angle (76) different from the first pressure angle (72).

2. A gearbox (30) of a gas turbine engine system of an aircraft, the gearbox (30) comprising:
a gearbox housing (38); and
one or more gear arrangements disposed in the housing (38) for transferring rotational energy extracted from a gas turbine engine (10) to one or more accessory components, a gear arrangement of the one or more gear arrangements including the spur gear (42) of claim 1.

3. A gas turbine engine system of an aircraft comprising:
a gas turbine engine (10); and
the gearbox (30) of claim 2 operably connected to the gas turbine engine (10).

4. The gearbox (30) or gas turbine engine system of claim 2 or 3, wherein the gearbox (30) is configured for operable connection to a or the gas turbine engine (10) via a power take off connecting a or the gas turbine engine (10) to the gearbox (30).

5. The spur gear (42), gearbox (30) or gas turbine engine system of any preceding claim, wherein the first tooth side is a drive side (66) of the gear tooth (52), and the first pressure angle (72) is greater than the second pressure angle (76).

6. The spur gear (42), gearbox (30) or gas turbine engine system of any preceding claim, wherein the first pressure angle (72) is in the range of 25 degrees to 40 degrees.

7. The spur gear (42), gearbox (30) or gas turbine engine system of any preceding claim, wherein the first pressure angle (72) is in the range of 30 degrees to 34 degrees.

8. The spur gear (42), gearbox (30) or gas turbine engine system of any preceding claim, wherein the second pressure angle (76) is in the range of 15 degrees to 30 degrees.

9. The spur gear (42), gearbox (30) or gas turbine engine system of any preceding claim, wherein the second pressure angle (76) is in the range of 17 degrees to 25 degrees.
